Europäisches Patentamt

European Patent Office

Office européen des brevets

(11) Veröffentlichungsnummer: **0 379 040**
**A1**

## (12) EUROPÄISCHE PATENTANMELDUNG

(21) Anmeldenummer: 90100396.2

(22) Anmeldetag: 09.01.90

(51) Int. Cl.5: **C02F 1/44, C02F 1/28, B01D 61/00**

(30) Priorität: 14.01.89 DE 3901005

(43) Veröffentlichungstag der Anmeldung:
25.07.90 Patentblatt 90/30

(84) Benannte Vertragsstaaten:
AT BE CH DE FR LI LU NL SE

(71) Anmelder: RHEINBRAUN Aktiengesellschaft
Stüttgenweg 2
D-5000 Köln 41(DE)

(72) Erfinder: Dolkemeyer, Wilfried, Dr.
Liebigstrasse 14
D-5047 Wesseling(DE)
Erfinder: Gierlich, Hans, Dr.
Buschdorfer Strasse 37
D-5300 Bonn-Buschdorf(DE)
Erfinder: Schmidt, Karin, Dr.
Friedensweg 53
D-5047 Wesseling(DE)
Erfinder: Lenz, Uew, Dr. rer.nat.
Heideweg 7
D-5020 Frechen(DE)

(74) Vertreter: Koepsell, Helmut, Dipl.-Ing.
Mittelstrasse 7
D-5000 Köln 1(DE)

(54) Vorrichtung und Verfahren zur Reinigung von Abwasser.

(57) Die vorliegende Erfindung betrifft ein Verfahren zur Reinigung von Abwasser, das eine Kombination von Adsorptionsstufe(n) und Umkehrosmose enthält.

EP 0 379 040 A1

## Vorrichtung und Verfahren zur Reinigung von Abwasser

Die vorliegende Erfindung betrifft ein Verfahren zur Reinigung von Abwasser, das eine Kombination von Adsorptionsstufe(n) und Umkehrosmose enthält.

Die Reinigung von verschmutzem Wasser zur Erhaltung der Umwelt ist eine der großen Herausforderungen an die moderne Industriegesellschaft. Es sind zahlreiche Verfahren bekannt, die nach ganz unterschiedlichen Prinzipien arbeiten.
Beispielhaft seien biologische Verfahren genannt, die vor allem dazu dienen, organische Verunreinigungen und Stickstoff enthaltende Verunreinigungen mittels Bakterien aerob zu entfernen. Aus der sehr umfangreichen Patentliteratur können nur wenige Beispiele genannt werden, wie DE-OS 35 23 844, EP-A-0 202 626, EP-A-0 154 915, DE-PS 25 12 815.
An anaeroben Verfahren seien beispielhaft genannt: DE-OS 33 07 796, EP 0 046 901, EP 0 119 430.

Auch die Umkehrosmose wird zur Reinigung von Abwasser eingesetzt (DE-OS 35 43 661, EP-A-0 229 414).

Von Bedeutung bei der Abwasserreinigung sind auch adsorptive Verfahren. Gemäß DE-PS 24 18 169 und DE-PS 28 19 572 wird $\gamma$-$Al_2O_3$ als Adsorbens eingesetzt. Nach DE-OS 33 35 994 wird ein Filterpatronensystem eingesetzt, welches ein geeignetes Adsorptionsmittel enthält. Nach DE-OS 34 01 867 wird ein Adsorberharz verwendet.

Auch Kohlematerialien werden als Adsorptionsmittel eingesetzt. So offenbart DE-OS 34 36 453 ein zweistufiges Verfahren, wobei in einer ersten Stufe pulverförmige Aktivkohle im Abwasser dispergiert wird und anschließend die Feststoffe abfiltriert werden.

In einer 2. Stufe wird das vorgereinigte Wasser in einen Aktivkohle-Adsorptionsturm unter gleichzeitiger Luftzufuhr eingesprüht.

Nach DE-OS 32 21 451 wird Aktivkohle, bevorzugt Ruß aus Vergasungsanlagen, mit einem Flockungsmittel und einem Polymeren zu Pellets gepresst, die in das Abwasser unter Rühren eingetragen werden.

In EP-A-0 134 271 wird ein Abwasserreinigungsverfahren offenbart, gemäß dem Abwasser von unten nach oben durch ein Kohlebett bewegt wird, wobei das Kohlebett um ca. 30 % expandiert.

Eine besonders wichtige Aufgabenstellung ist hierbei, auf wirtschaftliche Weise auch stark verschmutzte Abwässer zumindest soweit zu reinigen, daß sie in üblichen Kläranlagen weitergereinigt werden können. Es ist bekannt, daß Deponiesickerwasser bereits ab 01.01.1989 nach dem geänderten Abwassergesetz auch rechtlich als Abwasser eingestuft wird. Es ist daher mit zunehmenden Anforderungen zur Reinigung solcher Abwässer zu rechnen. Die derzeitigen zur Reinigung von Sickerwasser eingesetzten Verfahren sind die biologische Reinigung mit chemisch/physikalischer Nachbehandlung und die Umkehrosmose (siehe z.B. "Abwassertechnik", 1-2, 1988 Seite 34-38).

Biologische Abwasserreinigungsverfahren werden seit langem in Kommunal- und Industrie-Anlagen angewandt. Eine gegenüber den Flachbecken neuere Entwicklung sind die biologischen Kläranlagen, in denen in senkrecht stehenden, turmartigen Behältern die Abwasserreinigung erfolgt, bekannte Verfahren sind die Bayer-Turmbiologie und der von Hoechst entwickelte Biohochreaktor.
Nachteilig bei den bekannten biologischen Kläranlagen ist, daß diese nicht vor Ort, wo bestimmte Abwässer, wie z.B. Deponiesickerwässer anfallen, eingesetzt werden können, sondern das Abwasser zu der Anlage transportiert werden muß, wobei ggfs. große Transportwege in Kauf genommen werden müssen.

Umkehrosmose-Anlagen können dagegen als kompakte, mobile Anlagen eingesetzt werden. Der bekannte Nachteil der Umkehrosmose ist jedoch, daß sie ein Aufkonzentrier-Verfahren darstellt, d.h. aus Abwässern kann zwar der überwiegende Volumenanteil als reines Wasser abgetrennt werden, es verbleibt jedoch ein die Verunreinigungen enthaltendes Konzentrat, dessen Entsorgung häufig ein erhebliches Problem darstellt. Kann es nicht auf eine Deponie rückgeführt werden, muß es verdampft oder verbrannt werden (siehe Chem.-Ing.-Tech. 59 (1987) Nr. 3, S.187-196, insbesondere S. 193, linke Spalte).

Aufgrund des geschilderten Standes der Technik bestand daher die Aufgabe, ein verbessertes Verfahren zu entwickeln, das sowohl in mobil als auch fest installierten Anlagen dem Fachmann die Möglichkeit bietet, die besonders häufigen und umweltschädigenden Abwasserverunreinigungen, nämlich durch den CSB-Wert bestimmte organische Verunreinigungen, ferner Ammonium-Verbindungen und schließlich adsorbierbare organische Halogenverbindungen (AOX) aus dem Abwasser zu entfernen, ohne gleichzeitig schwer entsorgbare Konzentrate von Verunreinigungen zu erzeugen.

Die Untersuchungen der Anmelderin haben zu dem sicher nicht naheliegenden Ergebnis geführt, daß sich durch die erfinderische Kombination von Adsorption und Umkehrosmose die geschilderten Nachteile des Standes der Technik in bisher unerreichter Weise überwinden lassen, dadurch gekennzeichnet, daß das Wasser mit wenigstens einem Adsorptionsbett in Kontakt gebracht wird, daß das im Adsorptionsbett teilweise gereinigte Wasser wenigstens einer Umkehrosmose zugeleitet wird, das aus der Umkehrosmose austretende Konzentrat mit wenigstens einem Adsorptionsbett in Kontakt gebracht wird.

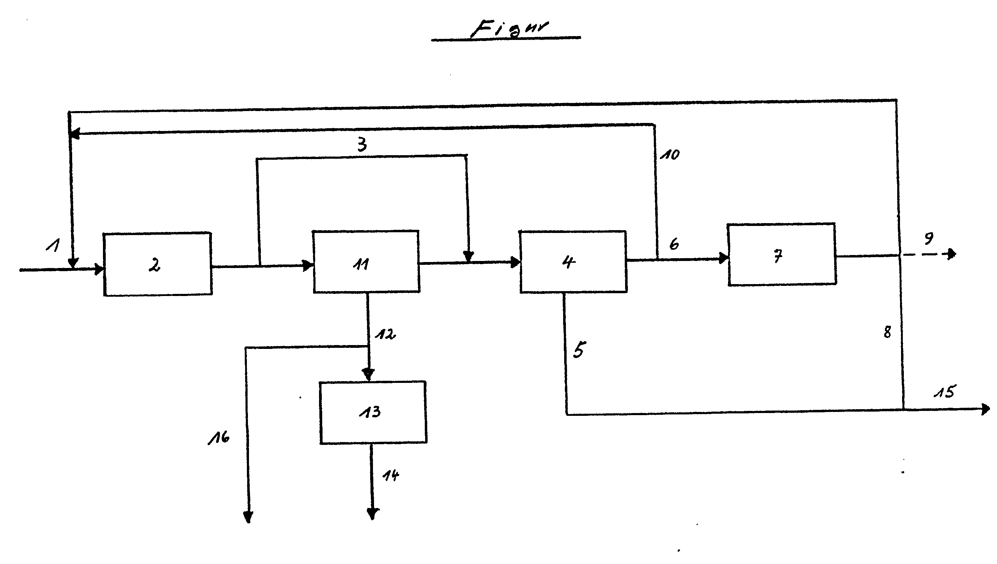

In der Figur ist das erfindungsgemäße Vorhaben beispielhaft dargestellt.

Erfindungsgemäß wird Abwasser, das organische Verunreinigungen, ggfs. Ammoniumverbindungen und adsorbierbare chlorhaltige Verbindungen enthält, zunächst mit einem Adsorptionsmittel in Kontakt gebracht. Ein typisches Abwasser, das solche Verunreinigungen enthält, ist Deponiesickerwasser.

Eine vorteilhafte Adsorptions-Vorrichtung ist ein Behälter, in dem sich oberhalb des Behälterbodens ein wasserdurchlässiger, siebartiger Boden befindet, auf dem adsorbierendes Material angeordnet ist, wobei durch wenigstens einen Ablauf zwischen den Böden Wasser entnommen werden kann.

Grundsätzlich kann der Behälter jede Bauform besitzen, also zylirdrisch und rund sein, viereckig, rechteckig, trapezförmig oder auch aus zusammengesetzten Raumformen bestehen wie z.B. sich im oberen Teil trapezförmig erweitern, unten jedoch viereckig oder rechteckig sein. Die genannte Vorrichtung und die aufgezählten Raumformen sind als beispielhaft, jedoch nicht als limitierend anzusehen.

Die erfindungsgemäße Vorrichtung kann aus unterschiedlichen Materialien bestehen wie sie im Behälterbau üblich sind, also aus Stahl, Guß, Edelstahl, Kunststoffen, Stahlbeton, Verbundwerkstoffen u.a.

Es kann sich jedoch auch um eine einfachere mit einem Adsorptionsmittel gefüllte Vorrichtung handeln, durch die das Abwasser von oben nach unten fließt oder von unten nach oben gedrückt wird und oben überfließt, ohne daß spezielle siebartige Vorrichtungen eingebaut sein müssen. Der spezielle Bau des Behälters hängt u.a. ab von der Art des Adsorptionsmittels und auch von seiner Korngröße. Bei großer Korngröße kann ggfs. auf einen Siebboden verzichtet werden. Es kann beispielsweise ein Sieb direkt vor dem Abfluß genügen.

Bei der erfindungsgemäßen Kombination von Verfahrensschritten können grundsätzlich alle bekannten Adsorptionsanlagen bzw. -vorrichtungen eingesetzt werden.

Bei dem erfindungsgemäßen Verfahren kann jedes adsorbierende Material verwendet werden, ein bevorzugtes Material sind Kokse, da diese wesentlich wirtschaftlicher sind als beispielsweise Aktivkohle.

Im Fall des Einsatzes von Koks hat die Anmelderin gefunden, daß zwar jedes Adsorptionsmittel eingesetzt werden kann, daß jedoch Koks auf Braunkohlebasis ein bevorzugtes Material ist.

Es kann sich hierbei um nach verschiedenen Verfahren hergestellte Kokse, wie Hochtemperatur-, Tieftemperatur- oder Herdofenkoks handeln. Letzterer hat sich als besonders geeignet erwiesen.

Besonders günstige Ergebnisse werden erhalten, wenn der Koks einer Vorbehandlung unterzogen wird, durch die eine Entgasung des Kokses erfolgt. Dies kann durch Evakuieren des Kokses und anschließendes Auffüllen mit Wasser oder durch Auffüllen mit Wasser im ersten Schritt und anschließendes Evakuieren erfolgen. Andere vorteilhafte Methoden sind das Behandeln mit Dampf, gefolgt von Auffüllen mit Wasser das heiß oder kalt sein kann oder das Einsaugen des Kokses mit einer Wasserstrahlpumpe, wobei Evakuieren und Mischen mit Wasser erfolgen.

Das in dem Adsorber insbesondere durch Erniedrigung der Fracht an organischen Verunreinigungen gereinigte Wasser - wobei in dem Adsorber auch andere Verunreinigungen festgehalten werden können, wie z.B. Schwermetalle -, kann nun bei Vorliegen von Ammoniumverbindungen durch Behandlung mit einer Base, insbesondere mit Natronlauge, aber auch mit $Ca(OH)_2$ oder Gemischen derselben oder anderen Laugen bzw. Gemischen, von $NH_3$ befreit werden. Das ausgetriebene $NH_3$ kann einer Verwendung zugeführt werden, bevorzugt wird es jedoch in einer Behandlungsstufe mit $NO_2^-$, das als freie Säure und/oder Salz vorliegen kann, beispielsweise nach den Gleichungen:

$$HNO_2 + NH_3 \rightarrow N_2 + 2H_2O$$
$$NH_4Cl + NaNO_2 \rightarrow N_2 + NaCl + H_2O$$

in elementaren Stickstoff umgewandelt. Die Weiterbehandlung des $NH_3$ richtet sich jedoch auch nach sonstigen verfügbaren Einrichtungen. So kann es beispielsweise einer biologischen Abwasser-Behandlungsanlage zugeführt werden, in der durch Nitrifikation und Denitrifikation eine biologische Umwandlung in elementaren Stickstoff erfolgt.

Die Abtrennung des $NH_3$, das sich in wässriger Lösung im Gleichgewicht mit Ammoniumhydroxid befindet:

$$NH_3 + H_2O \rightleftharpoons NH_4^+ OH^-$$

oder in Gegenwart von Säuren mit einem Ammoniumsalz $NH_3 + HX \rightleftharpoons NH_4^+ X^-$

kann auch durch andere bekannte oder noch zu entwickelnde Methoden zur $NH_3$-Entfernung abgetrennt werden, wie beispielsweise mit Hilfe von natürlichen und/oder künstlichen Aluminiumsilikaten, wobei letztere im allgemeinen Zeolithe sind. Wendet man beispielsweise die Alkalisalze solcher Aluminiumsilikate an, so wird z.B. $Na^+$ oder $K^+$ gegen $NH_4^+$ ausgetauscht, wobei letzteres an das Aluminiumsilikat gebunden wird.

Beispielhaft seien einige geeignete Aluminiumsilikate genannt:

Kaliumzeolith F

Natriumzeolith X

Clinoptilolit A
Clinoptilolit B
Chabazit
Natriumzeolith A
Natriumzeolith Y
Kaliumzeolith X
Kaliumzeolith Y
Phillipsit
Eriomit
(siehe US-PS 3,723,308)

Auch Zeolithe auf Kohlenaschebasis, insbesondere Steinkohlenaschebasis z.B. aus Kraftwerksasche sind erfindungsgemäß einsetzbar.

Auch andere Ionenaustauscher z.B. auf organisch-synthetischer Basis können eingesetzt werden.

Ferner können alle für die $NH_3$-Adsorption geeigneten Adsorptionsmittel eingesetzt werden, wie Adsorptionsmittel auf $SiO_2$ oder oder auch feinverteilte Kohlen, insbesondere Braunkohlen.

Die genannten Materialien sind als beispielhaft, jedoch nicht limitierend anzusehen.

Die Entfernung des abgetrennten $NH_3$ kann auch auf die Weise erfolgen, daß man die Materialien direkt mit einer wässrigen Lösung von $NO_2^-$ behandelt, ohne das $NH_3$ vorher wie beispielsweise durch Strippen zu entfernen.

Die Aluminiumsilikate bzw. Zeolithe, Ionenaustauscher und Adsorptionsmittel können nach üblichen Verfahren regeneriert werden. Weitere mögliche Umsetzungen des $NH_3$ sind z.B. katalytische Verbrennung
$4 NH_3 + 6 O_2 \rightarrow 2 N_2 + 6 H_2O$
Oxidation mit $H_2O_2$
$2 NH_3 + 3 H_2O_2 \xrightarrow{CO_2} N_2 + 6 H_2O$
oder Einleiten in Schwefelsäure $2 NH_3 + H_2SO_4 \rightarrow (NH_4)_2 SO_4$ (Verwendung als Düngemittel)

Das von $NH_3$ befreite Abwasser gelangt nunmehr in eine Umkehrosmose-Anlage. Hierbei sind alle geeigneten Umkehrosmoseverfahren des Standes der Technik bzw. deren Weiterentwicklungen anwendbar.

Für die erfindungsgemäße Kombination von Verfahrensschritten eignen sich alle Verfahrensschritte des Standes der Technik, ebenso wie technische Weiterentwicklungen, besonders jedoch solche in denen ein Permeat erhalten werden kann, das mindestens in dem Umfang von Verunreinigungen befreit ist, daß es den Anforderungen zur Direkteinleitung in Gewässer entspricht. Bevorzugt sind solche Vorhaben, mit denen ein besonders reines Permeat erhalten werden kann.

Das in der Umkehrosmose anfallende Konzentrat wird nunmehr mit einem Adsorptionsmittel in Kontakt gebracht. Für diese Stufe gilt das bereits im Zusammenhang mit der ersten Adsorptionsstufe erläuterte.

Das aus der zweiten Adsorptionsstufe aus dem Konzentrat gewonnene gereinigte Abwasser kann nunmehr zur ersten Adsorptionsstufe zurückgeführt werden, es kann alternativ einer Kläranlage zugeführt werden oder bevorzugt ganz oder teilweise mit dem Permeat der Umkehrosmose-Anlagegemischt werden und in öffentliche Gewässer eingeleitet werden, da durch das erfindungsgemäße Verfahren erreicht wird, daß das Gemisch den gesetzlichen Anforderungen der Direkteinleitung entspricht. Grundsätzlich kann auch das aus der Umkehrosmose austretende Konzentrat direkt der ersten Adsorptionsstufe zugeführt werden.

Erfindungsgemäß können die beschriebenen Stufen auch mehrfach hintereinander oder parallel geschaltet sein.

Die entscheidende erfinderische Wirkung, die auf der erfinderischen Kombination von Adsorption und Umkehrosmose beruht, ist die vollständige Aufarbeitung, auch stark kontaminierter Abwasser, auf eine Reinheit, daß sie unbedenklich den öffentlichen Gewässern zugeführt werden können, ohne daß ein Konzen trat an Verunreinigungen übrig bleibt.

Die beladenen Adsorptionsmittel können einer modern ausgerüsteten Verbrennung zugeführt werden, regeneriert oder auch deponiert werden, da die Adsorptionsmittel die Verunreinigungen nur in sehr geringem Umfang wieder abgeben.

Die Erfindung wird mit Hilfe der Figur und den ermittelten Daten näher erläutert.

Über (1) tritt Abwasser in die adsorptive Reinigungsstufe (2) ein. Ist das Abwasser im wesentlichen frei von Ammoniumverbindungen, tritt es über (3) ein in die Umkehrosmose-Anlage (4). Das gereinigte Abwasser (Permeat) tritt aus bei (5) und kann (über einen Vorfluter) öffentlichen Gewässer zugeführt werden (15). Das Konzentrat gelangt über (6) in den Adsorber (7). Das aus (7) austretende Wasser kann entweder über (8) mit dem Permeat gemischt werden oder es gelangt zurück zur Zuführung (1). Alternativ kann es über (9) einer Kläranlage zugeführt werden. Das Konzentrat kann auch direkt über (10) nach (1) gefahren werden.

Bei Vorliegen von Ammoniumverbindungen wird in (11) durch Zusatz einer Base, insbesondere von NaOH und zusätzliches Strippen z.B. mit Dampf $NH_3$ ausgetrieben. $NH_3$ gelangt über (12) nach (13), wo das $NH_3$ durch Zusatz von $HNO_2$ in elementaren Stickstoff (14) umgewandelt wird oder es gelangt über (16) in eine biologische Nitrifikations/Denitrifikations-Anlage. (11) kann auch eine Füllung enthalten, wie natürliche oder künstliche Aluminiumsilikate bzw. Zeolithe, sonstige Ionenaustauscher oder Adsorptionsmittel, an denen $NH_3$ adsorbiert bzw. festgehalten wird. Die Umsetzung mit $HNO_2$ oder einem Nitrit kann auch direkt in (11) erfolgen, jedoch auch wie beschrieben in (13).

Grundsätzlich ist eine Behandlung mit $NO_2^-$ auch in (2) möglich. Ferner kann auch, je nach Abwasser auf Stufe (7) verzichtet werden und das Konzentrat aus (4) über (10) nach (1) bzw. (2) rückgeführt werden.

Beispiel

Bei (1) treten 10 $m^3$/h Abwasser, das einen CSB-Wert von 1500 aufweist, Ammoniumstickstoff von 750 mg/l und AOX von 2,5 mg/l in (2) ein. Das aus (2) austretende Wasser hat einen CSB-Wert von 500, einen Ammonium-Stickstoff-Wert von 750 mg/l und AOX von 0,25 mg/l. Das Abwasser gelangt nunmehr nach (11), wo $NH_3$ durch Zusatz von NaOH ausgetrieben wird.

Das Wasser, das aus (11) austritt und in Umkehrosmose (4) fließt, hat einen CSB-Wert von 500, einen Ammonium-Stickstoff-Wert von 10 mg/l und einen AOX-Wert von 0,25 mg/l.

Das aus (4) austretende Permeat (6 m.) enthält noch organische Verunreinigungen gemäß einem CSB-Wert von 15, einen Ammonium-Stickstoff-Wert von 5 mg/l und einen AOX-Wert von 0,03 mg/l.

Das Konzentrat (4 $m^3$) besitzt einen CSB-Wert von 1230, einen AOX-Wert von 1,2 mg/l und einen $NH_4$-Wert von 17.

Das aus Adsorber (7) austretende Wasser (4 $m^3$) besitzt einen CSB-Wert von 450, einen $NH_4^+$-Stickstoff-Wert von 17 mg/l und einen AOX-Wert von 0,12 mg/l.

Mischt man das aus (7) austretende Wasser (8) mit dem aus (4) austretenden Permeat (5), so erhält man ein Wasser (10 $m^3$), das einen CSB-Wert von 150 besitzt, $NH_4^+$-Stickstoff von 10 mg/l und AOX von 0,07 mg/l.

Durch das erfindungsgemäße Verfahren läßt sich demgemäß bei Einsatz von nur jeweils einer Reinigungsstufe (2), (4) und (7) eine Reinigung erzielen, die es ermöglicht auch stark verunreinigtes Wasser problemlos in Gewässer einzuleiten.

Es können in Abhängigkeit von den Anforderungen, erfindungsgemäß auch mehrere dieser Stufen, parallel oder hintereinander geschaltet, eingesetzt werden.

Ansprüche

1. Verfahren zur Entfernung von Verunreinigungen aus Wasser, dadurch gekennzeichnet, daß das Wasser mit wenigstens einem Adsorptionsbett in Kontakt gebracht wird, daß das im Adsorptionsbett teilweise gereinigte Wasser wenigstens einer Umkehrosmose zugeleitet wird, das aus der Umkehrosmose austretende Konzentrat mit wenigstens einem Adsorptionsbett in Kontakt gebracht wird.

2. Verfahren nach Anspruch 1, dadurch gekennzeichnet, daß das aus der ersten Adsorptionsbettreinigung austretende Wasser von $NH_3$ befreit wird.

3. Verfahren nach den Ansprüchen 1 und 2, dadurch gekennzeichnet, daß $NH_3$ durch Zusatz von Laugen und anschließendes Strippen entfernt wird.

4. Verfahren nach den Ansprüchen 1 - 3, dadurch gekennzeichnet, daß als Lauge NaOH und/oder $Ca(OH)_2$ eingesetzt wird.

5. Verfahren nach den Ansprüchen 1 und 2, dadurch gekennzeichnet, daß das $NH_3$ ($NH_3 \xrightarrow{H_2O} NH_4^+ OH^-$) mittels natürlicher und/oder künstlicher Aluminiumsilikate (Zeolithe) entfernt wird.

6. Verfahren nach den Ansprüchen 1 und 2, dadurch gekennzeichnet, daß das $NH_3$ ($NH_3 \xrightarrow{H_2O} NH_4^+ OH^-$) mittels Adsorptions-mitteln entfernt wird.

7. Verfahren nach den Ansprüchen 1 - 6, dadurch gekennzeichnet, daß das abgetrennte ($NH_3 \xrightarrow{H_2O} NH_4^+ OH^-$) mit $NO_2^-$ umgesetzt wird.

8. Verfahren nach den Ansprüchen 1 - 7, dadurch gekennzeichnet, daß als Adsorptionsmittelbehälter ein mobiler Behälter eingesetzt wird, in dem sich oberhalb des Behälterbodens ein wasserdurchlässiger, siebartiger Boden befindet, auf dem das Adsorptionsmittel angeordnet ist und durch wenigstens einen Ablauf zwischen den Böden, durch den das Wasser entnommen werden kann.

9. Verfahren nach den Ansprüchen 1 - 8, dadurch gekennzeichnet, daß als Adsorptionsmittel Koks eingesetzt wird.

10. Verfahren nach den Ansprüchen 1 - 9, dadurch gekennzeichnet, daß als Adsorptionsmittel Herdofenkoks aus Braunkohle eingesetzt wird.

11. Verfahren nach den Ansprüchen 1 - 10, dadurch gekennzeichnet, daß das im hinter der Umkehrosmose angeordneten Adsorptionsbett gereinigte Wasser mit dem aus der Umkehrosmose auftretenden gereinigten Wasser zumindest teilweise gemischt wird.

Figur

EP 0 379 040 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,P | US-A-4 808 287 (E.F. HARK) * Spalte 2, Zeilen 51-56; Spalte 3, Zeilen 6-58 * | 1 | C 02 F 1/44 C 02 F 1/28 B 01 D 61/00 |
| A | EP-A-0 278 745 (VERTECH TREATMENT SYSTEMS) * Spalte 2, Zeile 43 - Spalte 3, Zeile 4 * | 2,3,4 | |
| A | US-A-4 676 908 (E.J. CIEPIELA) * Spalte 4, Zeilen 31-44,51-65; Spalte 6, Zeilen 37-42 * | 1,8 | |
| A | DE-A-3 532 390 (CARL STILL GmbH) * Anspruch 1 * | 1 | |
| A | DE-A-2 355 422 (ZURN INDUSTRIES INC.) * Seite 10, Zeile 1 - Seite 11, Zeile 21 * | 8 | |

RECHERCHIERTE SACHGEBIETE (Int. Cl.5)

C 02 F
B 01 D

Der vorliegende Recherchenbericht wurde für alle Patentansprüche erstellt

| Recherchenort | Abschlußdatum der Recherche | Prüfer |
|---|---|---|
| DEN HAAG | 21-03-1990 | GONZALEZ Y ARIAS M.L. |